(19) Europäisches Patentamt
European Patent Office
Office européen des brevets

(11) Numéro de publication: **0 248 692**
**A1**

(12) # DEMANDE DE BREVET EUROPEEN

(21) Numéro de dépôt: **87401048.1**

(22) Date de dépôt: **07.05.87**

(51) Int. Cl.[3]: **C 04 B 35/46**
**H 01 G 4/12, H 01 B 3/12**

(30) Priorité: **23.05.86 FR 8607385**

(43) Date de publication de la demande:
**09.12.87 Bulletin 87/50**

(84) Etats contractants désignés:
**DE FR GB IT**

(71) Demandeur: **COMPAGNIE EUROPEENNE DE COMPOSANTS ELECTRONIQUES LCC**
**50, rue Jean-Pierre Timbaud B.P. 301**
**F-92402 Courbevoie(FR)**

(72) Inventeur: **Beauger, Alain**
**THOMSON-CSF SCPI 19, avenue de Messine**
**F-75008 Paris(FR)**

(72) Inventeur: **Wittmann, Roland**
**THOMSON-CSF SCPI 19, avenue de Messine**
**F-75008 Paris(FR)**

(74) Mandataire: **Ruellan-Lemonnier, Brigitte et al,**
**THOMSON-CSF SCPI 19, avenue de Messine**
**F-75008 Paris(FR)**

(54) **Composition céramique diélectrique à base de titanate de baryum stable en fonction de la température et condensateur utilisant cette composition.**

(57) La présente invention concerne une composition céramique diélectrique constituée d'un mélange comportant de 81 à 88 % en poids de titanate de baryum, de 2,5 % à 3 % en poids de titanate de bismuth, de 0,5 à 2 % en poids d'oxyde de néodyme, de 0 à 0,5 % en poids d'adjuvant et de 8 à 15 % en poids d'une phase stabilisée du type $BaBi_4Ti_4O_{15}$ et/ou $Ba_2Bi_4Ti_5O_{18}$, l'ensemble étant choisi pour faire 100 % en poids.

Cette composition est utilisée pour la fabrication de condensateurs.



Croydon Printing Company Ltd.

# COMPOSITION CERAMIQUE DIELECTRIQUE A BASE DE TITANATE DE BARYUM STABLE EN FONCTION DE LA TEMPERATURE ET CONDENSATEUR UTILISANT CETTE COMPOSITION.

La présente invention concerne une composition céramique diélectrique à base de titanate de baryum, ainsi qu'un condensateur utilisant cette composition.

Elle concerne plus particulièrement une composition céramique ayant une faible variation relative de capacité dans une très large gamme de température lui permettant d'atteindre la classe BX.

Cette classe de composants se définit notamment par une variation relative de capacité $\Delta C/C$ entre -55°C et +125°C inférieure ou égale à ± 15 % pour un signal de 1 volt à la fréquence de 1 KHz et par une variation relative de capacité inférieure à +15 % et à -25 % en présence d'un champ continu extérieur de l'ordre de 50 volts.

La demanderesse a déjà proposé dans le brevet français 2 522 870 des compositions satisfaisant à ces conditions. Ces compositions sont caractérisées en ce qu'elles comportent un mélange comprenant de 80 à 94 % en poids de titanate de baryum, de 1 à 3 % en poids d'oxyde de néodyme, de 0 à 4 % en poids d'oxyde de bismuth, de 2 à 5 % en poids de titanate de bismuth et de 2 à 8 % en poids de fritte de verre.

Il est connu que ce type de composition permet le frittage à basse température, tout en gardant d'excellentes propriétés électriques dans une large gamme de température.

Cependant ce type de matériau fait appel à un titanate de baryum non stoechiométrique comportant un rapport molaire $TiO_2/BaO$ compris entre 1,06 et 1,09.

Or, la non reproductibilité des titanates de baryum ainsi élaborés conduit à des fluctuations importantes tant au niveau des propriétés électriques que de l'aptitude au frittage de ces compositions.

D'autre part, la présence de phases mal définies à base de bismuth entraîne le plus souvent des instabilités de la céramique lors des essais de vieillissement ou lors de traitements agressifs. En effet, le bismuth est facilement réductible, ce qui entraîne des modifications importantes des caractéristiques électriques. Il est donc important de stabiliser le bismuth dans des édifices cristallins définis et stables vis-à-vis des traitements ultérieurs du diélectrique.

La présente invention a pour but de remédier à ces inconvénients en proposant une composition dans laquelle certains des éléments constitutifs ont été stabilisés afin d'assurer une meilleure reproductibilité au matériau céramique.

La présente invention a donc pour objet des compositions comportant 81 % à 88 % en poids de titanate de baryum, de 2,5 % à 3 % en poids de titanate de bismuth, de 0,5 à 2 % en poids d'oxyde de néodyme, de 0 à 0,5 % en poids d'adjuvant et de 8 à 15 % en poids d'une phase stabilisée de structure $BaBi_4Ti_4O_{15}$ et/ou $Ba_2Bi_4Ti_5O_{18}$, l'ensemble étant choisi pour faire 100 % en poids.

La phase de structure stabilisée $BaBi_4Ti_4O_{15}$ et/ou $Ba_2Bi_4Ti_5O_{18}$ présente l'avantage d'être stable et peu réfractaire.

De préférence, la chamotte de titanate de baryum est choisie de telle manière que le rapport de stoechiométrie $TiO_2/BaO$ soit compris entre 0,99 et 1,03 et plus particulièrement proche de 1. D'autre part, le titanate de bismuth est de la forme $Bi_2O_3$, 1,5 $TiO_2$ ou $Bi_2O_3$, 2 $TiO_2$.

Comme on le remarquera, les compositions de la présente invention n'utilisent plus de fondant ou fritte de verre, ni d'oxyde de bismuth $Bi_2O_3$.

Conformément à l'invention, le bismuth est stabilisé dans les structures suivantes :

$Ba\ Bi_4\ Ti_4\ O_{15}$

ou $Ba_2\ Bi_4\ Ti_5\ O_{18}$

Lesdites phases sont synthétisées au préalable à partir des oxydes de baryum, de bismuth et de titane, qui après mélange intime sont calcinés à haute température.

De préférence, la phase $BaBi_4Ti_4O_{15}$ comporte un rapport molaire $TiO_2/BaO$ compris entre 3,7 et 4,2 et la phase $Ba_2Bi_4Ti_5O_{18}$ comporte un rapport molaire $TiO_2/BaO$ compris entre 2,3 et 2,6.

Le titanate de baryum, le titanate de bismuth, les structures précitées $Ba\ Bi_4\ Ti_4\ O_{15}$ et/ou $Ba_2\ Bi_4\ Ti_5\ O_{18}$ et les adjuvants habituels tels l'oxyde de zinc, l'oxyde de manganèse, l'oxyde de néodyme, sont ensuite mélangés et la composition ainsi obtenue est mise en forme par la technologie de coulage afin d'obtenir des multicouches. Les électrodes internes métalliques sont constituées d'un alliage Palladium-Argent comportant en poids 70% d'argent.

Les condensateurs sont ensuite frittés à une température de 1130°C sous air.

Comme on le verra ci-après, les compositions ainsi élaborées présentent des propriétés électriques excellentes dans une très large gamme de température.

D'autres caractéristiques et avantages de la présente invention apparaîtront à la lecture des exemples de réalisation suivants.

Exemple 1 :

On réalise une chamotte de titanate de baryum dont le rapport de stoechiométrie est de 1,02.

On obtient également la phase $BaBi_4Ti_4O_{15}$ en mélangeant du carbonate de baryum $BaCO_3$, de l'oxyde de bismuth $Bi_2O_3$ et de l'oxyde de titane $TiO_2$, dans le rapport suivant : 1 $BaCO_3$, 2 $Bi_2O_3$, 4 $TiO_2$. Le broyage est conduit pendant 15 heures dans une jarre en porcelaine qui contient 200 g de billes de zircone, 300 cc d'eau désionisée et 200 g d'oxydes. La barbotine est séchée et la poudre calcinée à des températures comprises entre 1000°C et 1200°C et plus particulièrement à 1050°C pendant deux heures.

La composition retenue est la suivante :

| | |
|---|---|
| $BaTiO_3$ ($TiO_2/BaO$ = 1,02) | 83,06 % |
| Titanate de bismuth | 2,85 % |
| $Nd_2O_3$ | 1,43 % |
| ZnO | 0,22 % |
| Nitrate de manganèse | 0,22 % |
| $Ba\ Bi_4\ Ti_4\ O_{15}$ | 12,23 % |

(Dans les exemples, les pourcentages en poids sont donnés à + 0,1 % près)

Les constituants sont mélangés pendant 15 heures dans une jarre en porcelaine qui contient 2 kg de poudres, 4 kg de billes de zircone et 2500 cc d'eau désionisée.

La poudre ainsi obtenue après séchage (2 kg) est ensuite mélangée dans une jarre en porcelaine avec 7 kg de billes de zircone, 2 litres de solvant, 200 g de polymétacrylate de méthyl. L'ensemble de ces constituants est broyé pendant 15 heures. La barbotine obtenue est coulée sur un support rigide et lisse puis séchée afin d'obtenir une feuille plastique de céramique. A l'aide de cette feuille de céramique, on réalise des condensateurs multicouches constitués d'un empilement alterné de couches diélectriques céramiques et d'électrodes métalliques. Celles-ci sont déposées sur les feuilles de céramique selon la technique bien connue de la sérigraphie. Elles sont constituées d'un alliage palladium-argent comportant 70 % en poids d'argent.

Les condensateurs ainsi réalisés comportent 21 couches métallisées ayant des fonctions d'armatures, les couches de rangs pairs et les couches de rangs impairs, étant respectivement reliées entre elles après frittage par l'intermédiaire des terminaisons. Les condensateurs sont frittés sous air à une température proche de 1130°C. Après dépôt des terminaisons et cuisson à basse température, les multicouches sont testés électriquement et les résultats obtenus sont rassemblés dans le tableau suivant.

Tableau 1

| | |
|---|---|
| Capacité (nF) mesurée à 20°C | 65 |
| Tangente $\delta \times 10^{+4}$ à 20°C (sous tension de 1 Volt à 1 KHz) | 130 |
| Résistance d'isolement sous 100 Volts | 350 GΩ |
| Variation relative de capacité ΔC/C -55°C<br>+125°C | - 8 %<br>- 13 % |
| Constante diélectrique à 20°C | 2250 |
| Epaisseur de la couche céramique | 25 microns |
| Effet de tension sous 63 V continu<br>ΔC/C -55°C<br>+125°C | <br>- 20 %<br>- 27 % |

Dans le tableau 1 ci-dessus, on peut constater que le diélectrique selon l'invention ainsi que les condensateurs réalisés à partir de ce diélectrique possèdent une constante diélectrique élevée et une très bonne stabilité en fonction de la température.

Les diélectriques ainsi constitués présentent l'avantage de posséder une stabilité très grande lors des essais d'endurance et de chaleur humide sous tension.

Les essais ont été conduits sur 20 pièces, les conditions de l'expérience étant les suivantes :

Endurance :

| | |
|---|---|
| Temps écoulé lors de l'essai | 2000 heures |
| Température de l'essai | 125°C |
| Tension de l'essai | 95 Vcc |

On n'observe aucun défaut après 2000 heures d'essai. La variation relative de capacité est de -0,5 % en moyenne par rapport à la capacité initiale. Les résistances d'isolement mesurées sous 100 volts n'ont pas varié.

Chaleur humide sous tension :

| | |
|---|---|
| Temps écoulé lors de l'essai | 56 jours |
| Température de l'essai | 70°C |
| Tension de l'essai | 63 Vcc |
| Humidité relative | 95 % |

On n'observe aucun défaut après 56 jours d'essai. La variation relative de capacité est de - 0,5 % en moyenne par rapport à la capacité initiale. Les résistances d'isolement mesurées sous 100 volts n'ont pas varié.

Exemple 2 :

On réalise une chamotte de titanate de baryum dont le rapport de stoechiométrie est de 1,01.

La préparation de la phase Ba $Bi_4$ $Ti_4$ $O_{15}$ est conduite de façon identique à celle décrite à l'exemple 1.

La composition retenue est la suivante :

| | |
|---|---|
| $BaTiO_3$ ($TiO_2/BaO$ = 1,01) | 81,53 % |
| Titanate de bismuth | 2,79 % |
| $Nd_2O_3$ | 1,4 % |
| ZnO | 0,21 % |
| Nitrate de manganèse | 0,21 % |
| Ba $Bi_4$ $Ti_4$ $O_{15}$ | 13,85 % |

La composition, outre un titanate de baryum de stoechiométrie 1,01, présente un taux de Ba $Bi_4$ $Ti_4$ $O_{15}$ plus élevé que celui de l'exemple 1.

Le mélange des différents constituants et l'obtention de feuilles céramiques par la technologie de coulage sont identiques à ceux de l'exemple 1.

Après frittage à 1130°C, les multicouches obtenus sont testés électriquement après dépôt des terminaisons.

Les résultats obtenus sont présentés dans le tableau 2 ci-après.

Tableau 2

| | |
|---|---|
| Capacité (nF) mesurée à 20°C | 65 |
| Tangente $\delta \times 10^{+4}$ à 20°C (sous tension de 1 Volt à 1 KHz) | 170 |
| Résistance d'isolement sous 100 Volts | 400 G$\Omega$ |
| Variation relative de capacité $\Delta C/C$ -55°C<br>+125°C | - 10 %<br>- 11 % |
| Constante diélectrique à 20°C | 2200 |
| Epaisseur de la couche céramique | 25 microns |
| Effet de tension sous 63 V continu $\Delta C/C$ -55°C<br>+125°C | - 22 %<br>- 24 % |

D'après le tableau 2, on peut constater que le diélectrique selon l'invention ainsi que les condensateurs réalisés à partir de ce diélectrique possèdent une constante diélectrique élevée et une très bonne stabilité en fonction de la température.

Les résultats relatifs aux essais d'endurance et de chaleur humide sous tension sont présentés ci-après :

Endurance :

Temps écoulé lors de l'essai    2000 heures
Température de l'essai    125°C
Tension de l'essai    95 Vcc

On n'observe aucun défaut après 2000 heures d'essai. La variation relative de capacité est de - 1 % par rapport à la capacité initiale. Les résistances d'isolement mesurées sous 100 volts n'ont pas varié.

Chaleur humide sous tension :

| | |
|---|---|
| Temps écoulé lors de l'essai | 56 jours |
| Température de l'essai | 70°C |
| Tension de l'essai | 63 Vcc |
| Humidité relative | 95 % |

On n'observe aucun défaut après 56 jours d'essai. La variation relative de capacité est de + 1 % par rapport à la capacité initiale. Les résistances d'isolement mesurées sous 100 volts n'ont pas varié.

Exemple 3 :

On réalise une chamotte de titanate de baryum dont le rapport de stoechiométrie est de 1.

La préparation de la phase Ba $Bi_4$ $Ti_4$ $O_{15}$ est conduite de façon identique à celle décrite à l'exemple 1.

La composition retenue est la suivante :

| | |
|---|---|
| $BaTiO_3$ ($TiO_2$/BaO = 1) | 85,47 % |
| Titanate de bismuth | 2,93 % |
| $Nd_2O_3$ | 1,47 % |
| ZnO | 0,22 % |
| Nitrate de manganèse | 0,22 % |
| Ba $Bi_4$ $Ti_4$ $O_{15}$ | 9,68 % |

La composition, outre un titanate de baryum de stoechiométrie 1, présente un taux de Ba $Bi_4$ $Ti_4$ $O_{15}$ de 9,68 %, qui est par conséquent moins élevé que celui des exemples précédents.

Le mélange des différents constituants et l'obtention de feuilles céramiques par la technologie de coulage sont réalisés de manière identique à celle décrite à l'exemple 1.

Après frittage à 1130°C, les multicouches obtenus sont testés électriquement après dépôt des terminaisons.

Les résultats obtenus sont présentés dans le tableau 3 ci-après.

Tableau 3

| | |
|---|---|
| Capacité (nF) mesurée à 20°C | 55 |
| Tangente $\delta \times 10^{+4}$ à 20°C (sous tension de 1 Volt à 1 KHz) | 140 |
| Résistance d'isolement sous 100 Volts | 200 GΩ |
| Variation relative de capacité ΔC/C -55°C<br>+125°C | - 4 %<br>-19 % |
| Constante diélectrique à 20°C | 1800 |
| Epaisseur de la couche céramique | 24 microns |
| Effet de tension sous 63 V continu ΔC/C -55°C<br>+125°C | - 18 %<br>- 31 % |

D'après le tableau 3, on peut constater que le diélectrique présente un degré de frittage suffisant pour obtenir une constante diélectrique proche de 2000, et une grande stabilité en fonction de la température.

Les résultats relatifs aux essais d'endurance et de chaleur humide sous tension sont présentés ci-après :

Endurance :

| | |
|---|---|
| Temps écoulé lors de l'essai | 2000 heures |
| Température de l'essai | 125°C |
| Tension de l'essai | 95 Vcc |

On n'observe aucun défaut après 2000 heures d'essai. La variation relative de capacité est de - 5 % par rapport à la capacité initiale. Les résistances d'isolement mesurées sous 100 volts n'ont pas varié.

Chaleur humide sous tension :

| | |
|---|---|
| Temps écoulé lors de l'essai | 56 jours |
| Température de l'essai | 70°C |
| Tension de l'essai | 63 Vcc |
| Humidité relative | 95 % |

On n'observe aucun défaut après 56 jours d'essai. La variation relative de capacité est de - 1 % par rapport à la capacité initiale. Les résistances d'isolement mesurées sous 100 volts n'ont pas varié.

Exemple 4 :

On réalise une chamotte de titanate de baryum dont le rapport de stoechiométrie est de 1,03.

La préparation de la phase $Ba\ Bi_4\ Ti_4\ O_{15}$ est réalisée de façon identique à celle décrite à l'exemple 1.

La composition retenue est la suivante :

| | |
|---|---|
| $BaTiO_3$ ($TiO_2/BaO = 1$) | 81,53 % |
| Titanate de bismuth | 2,79 % |
| $Nd_2O_3$ | 1,4 % |
| ZnO | 0,21 % |
| Nitrate de manganèse | 0,21 % |
| $Ba\ Bi_4\ Ti_4\ O_{15}$ | 13,85 % |

La composition, outre un titanate de baryum de stoechiométrie 1,03, présente un taux de $Ba\ Bi_4\ Ti_4\ O_{15}$ élevé.

Le mélange des différents constituants et l'obtention de feuilles céramiques par la technologie de coulage sont réalisés de manière identique à celle de l'exemple 1.

Après frittage à 1130°C, les multicouches obtenus sont testés électriquement après dépôt des terminaisons.

Les résultats obtenus sont présentés dans le tableau 4 ci-après.

Tableau 4

| | |
|---|---|
| Capacité (nF) mesurée à 20°C | 60 |
| Tangente $\delta$ x $10^{+4}$ à 20°C (sous tension de 1 Volt à 1 KHz) | 110 |
| Résistance d'isolement sous 100 Volts | 350 G $\Omega$ |
| Variation relative de capacité $\Delta C/C$ -55°C<br>+125°C | - 16 %<br>- 19 % |
| Constante diélectrique à 20°C | 1860 |
| Epaisseur de la couche céramique | 25 microns |
| Effet de la tension sous 63 V continu $\Delta C/C$ -55°C<br>+125°C | - 25 %<br>- 26 % |

D'après le tableau 4, on peut constater que le diélectrique, malgré une constante diélectrique plus faible que celle obtenue avec le diélectrique de l'exemple 1, présente un degré de frittabilité suffisant et une bonne stabilité en température.

Les résultats relatifs aux essais d'endurance et de chaleur humide sous tension sont présentés ci-après :

Endurance :

Les conditions générales de l'expérience sont les suivantes :

Temps écoulé lors de l'essai 1000 heures

Température de l'essai 125°C

Tension de l'essai 95 Vcc

On n'observe aucun défaut après 1000 heures d'essai. La variation relative de capacité est de - 3 % par rapport à la capacité initiale. Les résistances d'isolement mesurées sous 100 volts n'ont pas varié.

Chaleur humide sous tension :

Les conditions générales de l'expérience sont les suivantes :

| | |
|---|---|
| Temps écoulé lors de l'essai | 21 jours |
| Température de l'essai | 70°C |
| Tension de l'essai | 63 Vcc |
| Humidité relative | 95 % |

On n'observe aucun défaut après 21 jours d'essai. La variation relative de capacité est de + 1 % par rapport à la capacité initiale. Les résistances d'isolement mesurées sous 100 volts n'ont pas varié.

D'après les résultats obtenus dans les exemples précédents, on obtient avec les compositions de la présente invention, des condensateurs présentant des caractéristiques électriques, notamment une capacité stable malgré la constante diélectrique élevée.

REVENDICATIONS

1. Composition céramique diélectrique, caractérisée en ce qu'elle est constituée d'un mélange comportant de 81 à 88 % en poids de titanate de baryum, de 2,5 % à 3 % en poids de titanate de bismuth, de 0,5 à 2 % en poids d'oxyde de néodyme, de 0 à 0,5 % en poids d'adjuvant et de 8 à 15 % en poids d'une phase stabilisée du type $BaBi_4Ti_4O_{15}$ et/ou $Ba_2Bi_4Ti_5O_{18}$, l'ensemble étant choisi pour faire 100 % en poids.

2. Composition céramique selon la revendication 1, caractérisée en ce que le titanate de baryum comporte un rapport molaire $TiO_2/BaO$ compris entre 0,99 et 1,03.

3. Composition céramique selon l'une quelconque des revendications 1 et 2, caractérisée en ce que les phases stabilisées $BaBi_4Ti_4O_{15}$ ou $Ba_2Bi_4Ti_5O_{18}$ sont synthétisées à partir d'oxydes de baryum, de bismuth et de titane qui après mélange sous des proportions déterminées, sont calcinées à haute température.

4. Composition céramique selon l'une quelconque des revendications 1 à 3, caractérisée en ce que la phase $BaBi_4Ti_4O_{15}$ comporte un rapport molaire $TiO_2/BaO$ compris entre 3,7 et 4,2.

5. Composition céramique selon l'une quelconque des revendications 1 à 4, caractérisée en ce que la phase $BaBi_4Ti_5O_{18}$ comporte un rapport molaire $TiO_2/BaO$ compris entre 2,3 et 2,6.

6. Composition céramique selon l'une quelconque des revendications 1 à 5, caractérisée en ce que le titanate de bismuth est de la forme $Bi_2O_3$, 1,5 $TiO_2$ ou de la forme $Bi_2O_3$ 2 $TiO_2$.

7. Composition céramique selon l'une quelconque des revendications 1 à 6, caractérisée en ce que les adjuvants sont choisis parmi les oxydes de zinc, les nitrates de manganèse et leur mélange.

8. Composition céramique selon la revendication 7, caractérisée en ce qu'elle comporte de 0,2 à 0,25 % en poids de nitrate de manganèse.

9. Composition céramique selon l'une quelconque des revendications 7 et 8, caractérisée en ce qu'elle comporte de 0,2 à

0248692

0,25 % en poids d'oxyde de zinc.

10. Condensateur électrique comportant au moins une couche diélectrique et au moins deux électrodes, caractérisé en ce que la couche diélectrique est constituée par une composition selon l'une quelconque des revendications 1 à 9.

11. Condensateur électrique selon la revendication 10 comportant une pluralité d'électrodes métalliques séparées par des couches diélectriques, les électrodes métalliques de rangs pairs et de rangs impairs étant respectivement connectées entre elles, caractérisé en ce que les électrodes sont constituées d'un mélange de palladium et d'argent comportant au moins 70 % en poids d'argent.

Office européen des brevets

# RAPPORT DE RECHERCHE EUROPEENNE

0248692

Numéro de la demande

EP 87 40 1048

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 088 009 (L.C.C.-C.I.C.E.) * Revendications 1,6-13 * | 1-11 | C 04 B 35/46<br>H 01 G 4/12<br>H 01 B 3/12 |
| Y | GB-A-1 090 906 (C.F. PULVARI) * Page 2, lignes 71-81; page 3, lignes 19-27,110-113 * | 1-11 | |
| Y | CHEMICAL ABSTRACTS, vol. 94, no. 12, mars 1981, page 736, résumé no. 94695w, Columbus, Ohio, US; & JP-A-80 124 224 (NIPPON TELEGRAPH AND TELEPHONE PUBLIC CORP.) 25-09-1980 | 1-11 | |
| Y | JAPANESE JOURNAL OF APPLIED PHYSICS, vol. 20, supplément 20-4, 1981, pages 139-142, Tokyo, JP; N. YAMOAKA et al.: "Low temperature sintered BaTiO3 ceramics with Bi4TiO12 added" * Page 141, colonne de gauche, en-bas * | 1-11 | **DOMAINES TECHNIQUES RECHERCHES (Int. Cl.4)**<br>C 04 B<br>H 01 G<br>H 01 B |
| Y | EP-A-0 106 401 (N.V. PHILIPS'GLOEILAMPENFABRIEKEN) * Revendications 1-5; page 4, lignes 17-37 * | 1-11 | |

Le présent rapport de recherche a été établi pour toutes les revendications

| Lieu de la recherche | Date d'achèvement de la recherche | Examinateur |
|---|---|---|
| LA HAYE | 31-08-1987 | SCHURMANS H.D.R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82